Europäisches Patentamt

European Patent Office

Office européen des brevets

(11) **EP 1 085 462 A1**

(19)

(12) # DEMANDE DE BREVET EUROPEEN

(43) Date de publication:
**21.03.2001 Bulletin 2001/12**

(51) Int Cl.⁷: **G06T 5/20**

(21) Numéro de dépôt: **00410114.3**

(22) Date de dépôt: **12.09.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **14.09.1999 FR 9911607**

(71) Demandeur: **STMicroelectronics S.A.**
**94250 Gentilly (FR)**

(72) Inventeurs:
• **Laury, Marc**
**38100 Grenoble (FR)**
• **Seigneret, Franck**
**38140 Rives (FR)**
• **Chiaruzzi, Emmanuel**
**38000 Grenoble (FR)**

(74) Mandataire: **de Beaumont, Michel**
**1, rue Champollion**
**38000 Grenoble (FR)**

(54) **Distribution d'erreur pour l'approximation de la couleur des pixels d'une image numérique**

(57) L'invention concerne un procédé d'approximation des couleurs respectives de pixels d'une image numérique (2) par sélection, dans une table de référence (6) et successivement pour chaque pixel (i) de l'image, d'une couleur (CLUT(RBG(i)+E'(i))) dont le code s'approche avec l'erreur la plus faible de la somme du code de la couleur (RGB(i)) du pixel courant et d'un terme de correction (E'(i)), dans lequel le terme de correction est égal à l'erreur la plus faible (ERR(i-1)) calculée lors de l'approximation d'un pixel précédent (i-1), affectée d'un coefficient de pondération (k') fonction de la position du pixel courant dans l'image.

Fig6

EP 1 085 462 A1

**Description**

La présente invention concerne le traitement des images numériques et en particulier la réduction des couleurs d'une image numérique aux couleurs d'une palette de couleurs de taille réduite.

Une image numérique est classiquement composée de rangées et de colonnes de pixels. Chaque pixel de l'image, repéré par une abscisse et une ordonnée, est associé notamment à une couleur. Les couleurs de tous les pixels d'une même image sont classiquement codées avec un même nombre de bits, ce nombre déterminant le nombre de couleurs possibles pour chaque pixel de l'image. A titre d'exemple, on considère un codage (dit RGB) dans lequel les couleurs sont représentées par trois composantes : rouge (R), verte (G) et bleue (B), dont chacune est codée sur huit bits. Un tel codage permet de décrire $2^{3 \times 8}$, c'est-à-dire plus de 16 millions de couleurs différentes.

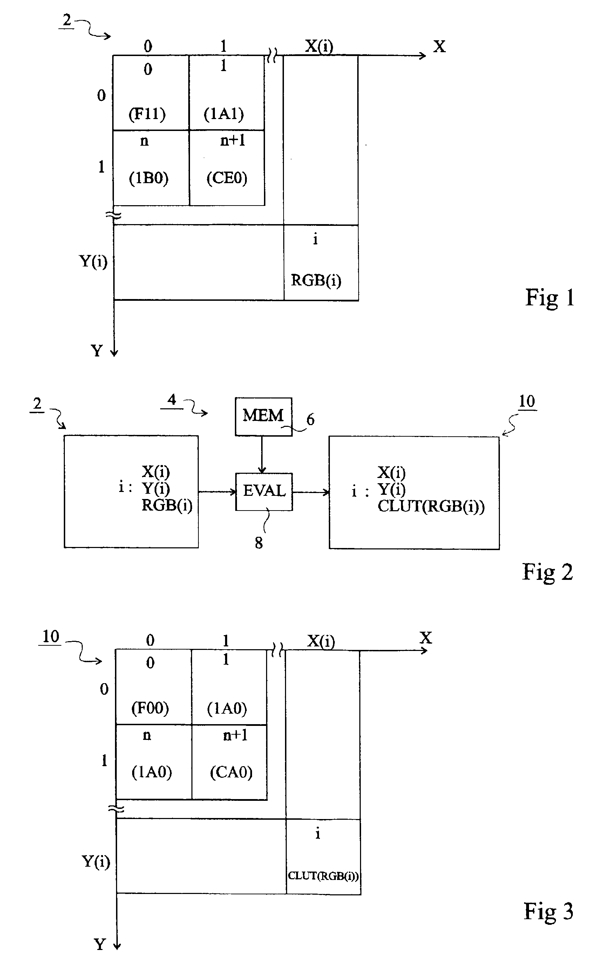

La figure 1 représente de manière très schématique un fragment d'une image numérique 2, organisée en lignes et en colonnes de pixels. Chaque pixel i de l'image 2 est repéré par une abscisse X(i) et une ordonnée Y(i), et est associé à une couleur RGB(i). A la figure 1, on a représenté les deux premiers pixels 0 et 1 de la première ligne de l'image 2. En considérant que l'image 2 est organisée en lignes de n pixels, les deux premiers pixels de la deuxième ligne de l'image sont désignés par n et n+1. On a associé à chacun des pixels représentés un exemple de couleur codée sur 24 bits. Pour des raisons de clarté, chacune des composantes R(i), G(i) et B(i) est représentée en hexadécimal. Le pixel 0 a une couleur RGB(0) = F11, le pixel 1 une couleur RGB(1) = 1A1, le pixel n une couleur RGB(n) = 1B0 et le pixel n+1 une couleur RGB(n+1) = CE0.

Dans certaines applications, on peut souhaiter réduire le nombre de bits associés aux couleurs d'une image numérique. Une image d'un nombre de pixels donné dont les couleurs sont codées sur un grand nombre de bits, représente un grand nombre de bits, et réduire ce nombre peut permettre de stocker l'image dans un espace mémoire réduit ou bien de la transmettre, par exemple avec un modem, en un temps plus court.

Une solution connue consiste à créer une table de référence, ou palette de couleurs (Color Look Up Table, ou CLUT) contenant un nombre restreint de couleurs codées comme les couleurs d'origine des pixels de l'image. Chaque pixel est alors associé à une adresse choisie dans la palette, qui correspond à la couleur de palette la plus proche de sa couleur d'origine.

La figure 2 représente schématiquement un circuit 4 permettant de faire une approximation telle que décrite ci-dessus de la couleur des pixels d'une image. Le circuit 4 comprend une mémoire (MEM) 6 dans laquelle sont stockées les couleurs de la palette et un circuit d'évaluation (EVAL) 8 dont une première entrée reçoit les couleurs de la palette, et dont une seconde entrée reçoit successivement la couleur d'origine de chaque pixel de l'image. Pour le type de codage pris comme exemple, si Rp, Gp et Bp sont les composantes d'une couleur de la palette, la différence entre une couleur d'origine RGB(i) d'un pixel i et cette couleur peut être calculée par |R(i)-Rp|+|G(i)-Gp|+|B(i)-Bp|. La recherche de la couleur de palette la plus proche de la couleur d'origine d'un pixel peut se faire en balayant systématiquement toute la palette, mais peut également se faire au moyen d'algorithmes de recherche plus rapides, par exemple un algorithme de recherche prenant les couleurs médianes successives entre les couleurs les plus proches obtenues dans la palette pour les évaluations précédentes du même pixel en déterminant toutefois, à chaque évaluation, le signe de la différence. Une fois qu'il a déterminé la couleur de palette la plus proche de la couleur d'origine d'un pixel, le circuit d'évaluation 8 sélectionne cette couleur de palette (CLUT(RGB(i))) en associant au pixel i l'adresse de cette couleur dans la palette. Comme cela a été indiqué précédemment, la palette comprend un nombre réduit de couleurs. L'adresse des couleurs de palette comprend donc un nombre réduit de bits. En remplaçant pour chaque pixel d'une image, le code de sa couleur d'origine par une telle adresse, on réduit sensiblement la taille en mémoire de l'image numérique. A titre d'exemple, si l'on associe aux couleurs codées sur 24 bits d'une image numérique une adresse d'une couleur d'une palette de 256 couleurs, codée sur 8 bits, on divise sensiblement la taille de cette image par 3.

La figure 3 représente de manière très schématique une image numérique 10 correspondant à l'image numérique 2 de la figure 1 après approximation de ses couleurs. Dans le cas représenté, on suppose que les couleurs de palette les plus proches des couleurs d'origine des quatre pixels 0, 1, n et n+1 de l'image 2 sont respectivement les couleurs ayant les codes F00, 1A0, 1A0 et CA0. Le circuit d'évaluation 8 associe à la couleur d'origine F11 du pixel 0 la couleur de palette F00, aux couleurs d'origine 1A1 du pixel 1 et 1B0 du pixel n, la couleur de palette 1A0, et à la couleur d'origine CE0 du pixel n+1, la couleur de palette CA0.

On notera qu'un tel procédé d'approximation entraîne une perte d'information en associant à plusieurs couleurs d'origine différentes la même couleur de palette. Ainsi, il fait disparaître dans une image les fondus de couleurs pouvant exister, et il crée des zones de couleur uniformes séparées brusquement les unes des autres. Ce phénomène est particulièrement gênant, par exemple, lorsque l'image numérique comporte des zones telles qu'un visage, comprenant de nombreux fondus de couleur chair de nuances différentes, présentant un faible contraste les unes par rapport aux autres. L'approximation décrite précédemment des couleurs d'un visage fait classiquement apparaître un nombre réduit de zones présentant entre elles un fort contraste, peu esthétique.

Un tel problème peut être atténué par un choix judicieux de la palette de couleur. Dans l'exemple précédent, cela revient à stocker dans la palette un nombre suffisant de nuances de couleur chair pour permettre une approximation convenable des fondus de couleur dans un visage. Cependant, une telle solution n'est pas toujours réalisable, la taille de la palette étant limitée.

Une autre solution connue pour atténuer le contraste entre les zones de couleur créées par le procédé d'approximation précédent consiste à mélanger artificiellement les couleurs des pixels situés à la frontière des zones de même couleur dans l'image. De cette manière, après approximation, la frontière de séparation entre les zones de couleur n'est plus nette, mais a l'aspect d'un nuage de points. L'oeil humain mélange les couleurs des points de ce nuage en une couleur homogène, et il accepte cette couleur recomposée comme étant une couleur intermédiaire entre les deux zones de couleur. On réalise ce mélange des couleurs des pixels de frontière en ajoutant un terme de correction à la couleur d'origine de chaque pixel de l'image avant son approximation. Ce terme de correction est fonction des erreurs d'évaluation de pixels précédents, affectées chacune de coefficients de pondération prédéterminés.

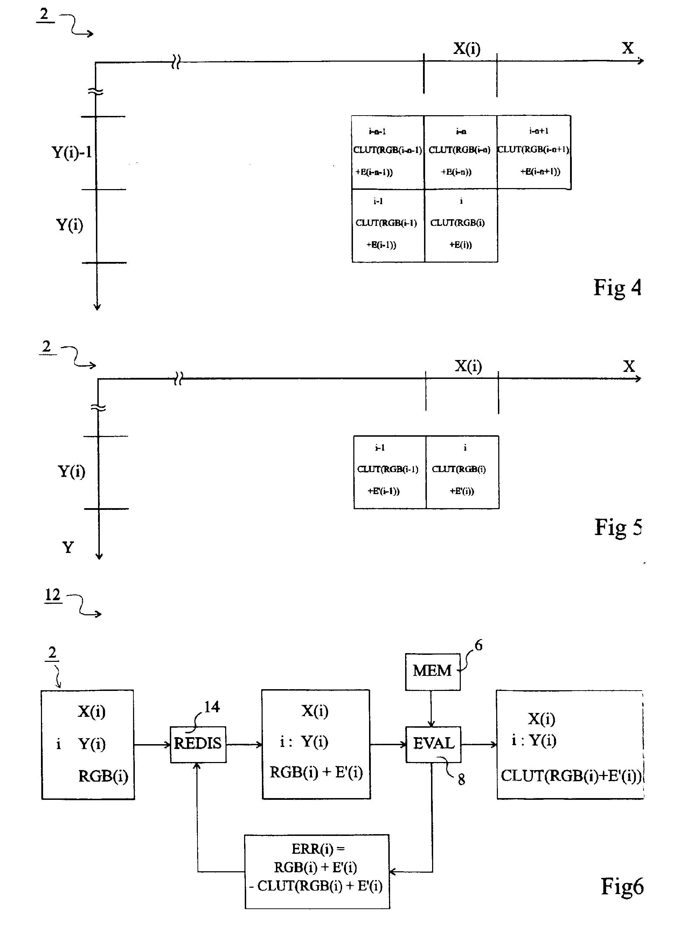

La figure 4 représente schématiquement les pixels précédents i-1, i-n-1, i-n et i-n+1 classiquement utilisés pour l'approximation de la couleur d'origine d'un pixel i d'une image 2. On notera que le pixel i-n représente un pixel de la ligne précédente, de même abscisse que le pixel i. Dans les solutions connues, il a été déterminé que le terme de correction E(i) ajouté à la couleur d'origine RGB(i) du pixel i pour son approximation doit, pour obtenir un résultat acceptable, être égal à :

$$K1.ERR(i\text{-}1) + K2.ERR(i\text{-}n\text{-}1) + K3.ERR(i\text{-}n) + K4.ERR(i\text{-}n\text{+}1),$$

où K1, K2, K3 et K4 sont des coefficients fixes prédéterminés, et où ERR(i-1), ERR(i-n-1), ERR(i-n) et ERR(i-n+1) correspondent aux erreurs d'approximation calculées pour les pixels i-1, i-n-1, i-n et i-n+1. En d'autres termes,

$$ERR(i) = |RGB(i) + E(i) - CLUT\ (RGB(i) + E(i))|.$$

Pour obtenir de bons résultats, les coefficients sont généralement les suivants : K1=7/16, K2=1/16, K3=5/16 et K4=3/16.

Un tel procédé revient à ajouter, aux valeurs futures des quatre pixels adjacents au pixel courant : 7/16 de l'erreur courante au pixel de droite (i+1), 3/16 de l'erreur au pixel du dessous à gauche (i+n-1), 5/16 de l'erreur au pixel du dessous (i+n), et 1/16 de l'erreur au pixel du dessous à droite (i+n+1).

Un premier inconvénient du procédé classique ci-dessus est qu'il nécessite, pour le traitement de chaque pixel, d'effectuer quatre multiplications pour pondérer les erreurs d'évaluation des pixels précédents, et quatre additions pour calculer le terme de correction. Ces multiplications et additions sont effectuées sur des codes ayant la longueur des codes de la couleur d'origine des pixels, c'est-à-dire comportant un grand nombre de bits. Ainsi, de telles opérations sont relativement complexes à mettre en oeuvre, en particulier dans un circuit intégré.

Un second inconvénient est que, pour traiter un pixel d'une ligne de l'image, il est nécessaire de conserver en mémoire les erreurs d'évaluation de trois pixels précédents situés sur la ligne précédente de l'image. Ainsi, ce procédé d'approximation nécessite de mémoriser en permanence les erreurs d'approximation calculées pour les pixels de toute la ligne précédente. Ces erreurs d'approximation doivent être stockées dans une mémoire particulière, ce qui accroît d'autant la complexité d'un circuit destiné à mettre en oeuvre ce procédé.

La présente invention vise à pallier les inconvénients des solutions connues. L'invention vise, en particulier, à proposer une solution d'approximation de la couleur d'origine des pixels d'une image numérique qui ne nécessite qu'un faible nombre de calculs et qui ne demande pas de garder en mémoire les erreurs d'approximation d'une ligne précédente.

La présente invention vise également à obtenir des images visuellement acceptables, au moyen d'un procédé qui soit simple à mettre en oeuvre dans un circuit intégré.

La présente invention vise également à proposer un circuit pour mettre un oeuvre un tel procédé.

Pour atteindre ces objets, la présente invention prévoit un procédé d'approximation des couleurs respectives de pixels d'une image numérique par sélection, dans une table de référence et successivement pour chaque pixel de l'image, d'une couleur dont le code s'approche avec l'erreur la plus faible de la somme du code de la couleur du pixel courant et d'un terme de correction, dans lequel le terme de correction est égal à l'erreur la plus faible calculée lors de l'approximation d'un pixel précédent, affectée d'un coefficient de pondération fonction de la position du pixel courant dans l'image.

Selon un mode de réalisation de l'invention, le coefficient de pondération est fonction des bits de poids faible respectifs de codes binaires représentant l'abscisse et l'ordonnée de la position du pixel courant.

Selon un mode de réalisation de l'invention, le coefficient de pondération est choisi parmi une première et une deuxième valeur lorsque le poids faible de l'abscisse de la position du pixel courant est nul et lorsque respectivement, le poids faible de l'ordonnée de la position du pixel courant est nul ou égal à un, et parmi une troisième et une quatrième valeur lorsque le poids faible de l'abscisse de la position du pixel courant est égal à un et lorsque respectivement, le poids faible de l'ordonnée de la position du pixel courant est nul ou égal à un.

Selon un mode de réalisation de l'invention, la première valeur est égale à 0,25, la deuxième valeur est égale à 1,00, la troisième valeur est égale à 0,75, et la quatrième valeur est égale à 0,50.

Selon un mode de réalisation de l'invention, l'image est balayée ligne par ligne, et le terme de correction est nul pour le premier pixel de chaque ligne.

La présente invention vise également un circuit électronique qui comporte des moyens destinés à mettre en oeuvre l'un quelconque des modes de réalisation du procédé d'approximation précédent.

Selon un mode de réalisation de l'invention, le circuit électronique comprend une mémoire dans laquelle sont stockées les codes des couleurs de la table de référence, un circuit d'évaluation dont une première entrée est destinée à recevoir un code de couleur provenant de la mémoire et dont une deuxième entrée reçoit un code corrigé, pour sélectionner la couleur stockée dont le code s'approche avec l'erreur la plus faible du code corrigé et pour produire un terme de correction égal à la différence entre la couleur stockée sélectionnée et le code corrigé, et un circuit de correction pour produire le code corrigé, égal à la somme du code de la couleur d'un pixel courant et du terme de correction, affectée du coefficient de pondération.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 à 4, qui ont été décrites précédemment, sont destinées à exposer l'état de la technique et le problème posé ;

la figure 5 représente schématiquement les pixels pris en compte dans un procédé d'approximation à répartition d'erreurs selon un mode de réalisation de la présente invention ; et

la figure 6 représente schématiquement un circuit destiné à mettre en oeuvre un procédé d'approximation de couleurs selon un mode de réalisation de la présente invention.

Pour des raisons de clarté, les mêmes éléments ont été désignés par les mêmes références aux différentes figures.

Une caractéristique de l'invention est qu'elle prévoit de calculer, au moyen d'un coefficient dont la valeur est fonction de l'abscisse et de l'ordonnée du pixel dans l'image, un terme de correction ajouté à la couleur d'origine de chaque pixel, lors de son approximation.

Une autre caractéristique de l'invention est que le terme de correction, ajouté à la couleur d'origine de chaque pixel avant approximation, est calculé à partir de l'erreur d'approximation d'un seul pixel, précédant immédiatement le pixel courant.

La figure 5 représente de manière schématique des pixels $i$ et $i-1$, utilisés selon un mode de réalisation de l'invention, pour le calcul du terme de correction ajouté à la couleur d'origine du pixel courant $i$. En conservant les notations utilisées précédemment, on appelle $ERR(i-1)$ l'erreur d'approximation calculée pour le pixel $i-1$ précédant le pixel $i$. Cette erreur correspond, de préférence, au module de la différence entre le code de la couleur d'origine majorée du terme de correction et le code de la couleur la plus proche dans la palette. Selon le mode de réalisation de la figure 5, l'approximation de la couleur d'origine $RGB(i)$ du pixel $i$ est faite en cherchant, dans la palette, la couleur la plus proche de la somme de $RGB(i)$ et d'un terme de correction $E'(i)$, où $E'(i) = k'.ERR(i-1)$.

Le coefficient $k'$ est selon un mode de réalisation préféré de l'invention, déterminé au moyen de la table de vérité suivante

| pf(X(i)) | 0 | 0 | 1 | 1 |
|----------|---|---|---|---|
| pf(Y(i)) | 0 | 1 | 0 | 1 |
| k' | k1 | k2 | k3 | k4, |

où $pf(X(i))$ et $pf(Y(i))$ désignent respectivement le bit de poids faible d'un code binaire représentant respectivement l'abscisse $X(i)$ et l'ordonnée $Y(i)$ du pixel $i$.

Ainsi, le coefficient de pondération est bien fonction de la position du pixel dans l'image mais est le même pour tous les pixels de l'image ayant des codes binaires d'abscisse et d'ordonnée dont les bits de poids faible sont les mêmes.

Les inventeurs ont déterminé que l'on pourra avantageusement utiliser les valeurs suivantes :

k1=0,25
k2=1,00
k3=0,75

k4=0,50.

Les pixels d'une image numérique sont, de préférence comme précédemment, traités séquentiellement, ligne après ligne. De préférence, le terme de correction du premier pixel de chaque ligne est nul, le pixel précédant un pixel de début de ligne n'étant pas son voisin sur l'image. On notera que selon le mode de réalisation préféré de la présente invention, le procédé d'approximation ne comporte qu'une seule addition, et qu'une seule multiplication pour le calcul du terme de correction, et qu'il nécessite seulement de mémoriser l'erreur d'approximation du pixel précédant le pixel courant. Ainsi, ce procédé sera particulièrement simple à mettre en oeuvre dans un circuit électronique.

La figure 6 représente schématiquement un circuit 12 destiné à mettre en oeuvre le procédé qui vient d'être décrit. Le circuit 12 comprend une mémoire 6 (MEM) reliée à une première entrée d'un circuit d'évaluation 8 (EVAL). Un circuit de correction 14 (REDIS) a une première entrée connectée pour recevoir successivement la couleur de chaque pixel de l'image, et une seconde entrée connectée pour recevoir l'erreur d'évaluation ERR(i) commise par le circuit d'évaluation 8 lors de l'évaluation de chaque pixel i.

On a également illustré, par des blocs non référencés, les données qui sont associées aux entrées-sorties des éléments 6, 8 et 14 pour un pixel i fourni au circuit 12. Pour chaque pixel i, le circuit de correction 14 fournit au circuit d'évaluation 8 la somme de la couleur d'origine RGB(i) du pixel i et du terme de correction E'(i) calculé à partir de l'erreur d'évaluation ERR(i-1) du pixel i-1 précédent, avec E'(i) = k'.ERR(i-1), k' ayant été précédemment défini. Le circuit d'évaluation 8 associe à cette somme la couleur de palette CLUT(RGB(i) + E'(i)) dont la couleur s'approche avec l'erreur la plus faible. L'erreur d'approximation ERR(i) fournie par le circuit d'évaluation 8 au circuit de redistribution 14 pour le pixel suivant est cette erreur la plus faible.

Bien entendu, la présente invention est susceptible de diverses variantes et modifications qui apparaîtront à l'homme du métier. Par exemple, on a exposé un procédé dans lequel le coefficient de pondération utilisé pour le calcul du terme de correction E'(i) d'un pixel i est sélectionné parmi quatre valeurs en fonction du bit de poids faible des codes de l'abscisse et de l'ordonnée de ce pixel, mais on pourra également utiliser un plus grand nombre de coefficients de pondération, par exemple seize valeurs sélectionnées en fonction des deux bits de poids faibles de l'abscisse et l'ordonnée. D'autre part, la présente invention a été décrite en relation avec des couleurs codées en RGB, pour lesquelles la distance entre deux couleurs peut être évaluée en calculant la somme des valeurs absolues des différences des composantes RGB des deux couleurs, mais l'homme du métier adaptera sans difficultés la présente invention à des couleurs codées différemment.

## Revendications

1. Procédé d'approximation des couleurs respectives de pixels d'une image numérique (2) par sélection, dans une table de référence (6) et successivement pour chaque pixel (i) de l'image, d'une couleur (CLUT(RBG(i)+E'(i))) dont le code s'approche avec l'erreur la plus faible de la somme du code de la couleur (RGB(i)) du pixel courant et d'un terme de correction (E'(i)), caractérisé en ce que le terme de correction est égal à l'erreur la plus faible (ERR(i-1)) calculée lors de l'approximation d'un pixel précédent (i-1), affectée d'un coefficient de pondération (k') fonction de la position du pixel courant dans l'image.

2. Procédé selon la revendication 1, caractérisé en ce que le coefficient de pondération (k') est fonction des bits de poids faible respectifs (pf[X(i)], pf[Y(i)]) de codes binaires représentant l'abscisse (x(i)) et l'ordonnée (Y(i)) de la position du pixel courant.

3. Procédé selon la revendication 2, caractérisé en ce que le coefficient de pondération (k') est choisi :

   parmi une première et une deuxième valeur lorsque le poids faible de l'abscisse de la position du pixel courant est nul et lorsque respectivement, le poids faible de l'ordonnée de la position du pixel courant est nul ou égal à un, et
   parmi une troisième et une quatrième valeur lorsque le poids faible de l'abscisse de la position du pixel courant est égal à un et lorsque respectivement, le poids faible de l'ordonnée de la position du pixel courant est nul ou égal à un.

4. Procédé selon la revendication 3, caractérisé en ce que :

   la première valeur est égale à 0,25,
   la deuxième valeur est égale à 1,00,
   la troisième valeur est égale à 0,75, et
   la quatrième valeur est égale à 0,50.

**5.** Procédé selon l'une quelconque des revendications 1 à 4, caractérisé en ce que l'image est balayée ligne par ligne, et en ce que le terme de correction est nul pour le premier pixel de chaque ligne.

**6.** Circuit électronique (12) d'approximation des couleurs respectives de pixels d'une image numérique, caractérisé en ce qu'il comporte des moyens pour mettre en oeuvre le procédé selon l'une quelconque des revendications 1 à 5.

**7.** Circuit électronique selon la revendication 6, comprenant :

une mémoire (6) dans laquelle sont stockées des couleurs de la table de référence, codées de la même manière que les couleurs des pixels,
un circuit d'évaluation (8) dont une première entrée est destinée à recevoir un code provenant de la mémoire et dont une deuxième entrée reçoit le code d'un pixel de l'image majoré d'un terme de correction pour sélectionner la couleur stockée (CLUT(RGB(i)+E'(i)) dont le code s'approche avec l'erreur la plus faible, et
un circuit de correction (14) dont une entrée est connectée à une sortie du circuit d'évaluation, pour produire un code corrigé, égal à la somme du code de la couleur (RGB(i)) d'un pixel courant (i) et du terme de correction (E'(i)).

Fig 1

Fig 2

Fig 3

**2**

| X(i) | X |
|---|---|

| i-n-1<br>CLUT(RGB(i-n-1)<br>+E(i-n-1)) | i-n<br>CLUT(RGB(i-n)<br>+E(i-n)) | i-n+1<br>CLUT(RGB(i-n+1)<br>+E(i-n+1)) |
|---|---|---|
| i-1<br>CLUT(RGB(i-1)<br>+E(i-1)) | i<br>CLUT(RGB(i)<br>+E(i)) | |

Y(i)-1

Y(i)

Fig 4

**2**

| X(i) | X |
|---|---|

| i-1<br>CLUT(RGB(i-1)<br>+E'(i-1)) | i<br>CLUT(RGB(i)<br>+E'(i)) |
|---|---|

Y(i)

Y

Fig 5

**12**

**2**

i : X(i) Y(i) RGB(i)

→ REDIS (14) →

X(i) i : Y(i) RGB(i) + E'(i)

→ EVAL (8) ←  MEM (6)

X(i) i : Y(i) CLUT(RGB(i)+E'(i))

ERR(i) =
RGB(i) + E'(i)
- CLUT(RGB(i) + E'(i))

Fig6

8

**Office européen des brevets**

# RAPPORT DE RECHERCHE EUROPEENNE

Numéro de la demande

EP 00 41 0114

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 853 423 A (SHARP KK) 15 juillet 1998 (1998-07-15) * abrégé * * page 4, ligne 40 - ligne 28 * * page 7, ligne 44 - ligne 48 * --- | 1-7 | G06T5/20 |
| Y | EP 0 273 398 A (KONISHIROKU PHOTO IND) 6 juillet 1988 (1988-07-06) * abrégé * * page 4, ligne 53 - page 5, ligne 13; figure 2 * --- | 1-7 | |
| A | EP 0 487 304 A (CANON KK) 27 mai 1992 (1992-05-27) * page 2, ligne 30 - ligne 46 * ----- | 1-7 | |

**DOMAINES TECHNIQUES RECHERCHES (Int.Cl.7)**

G06T

Le présent rapport a été établi pour toutes les revendications

| Lieu de la recherche | Date d'achèvement de la recherche | Examinateur |
|---|---|---|
| LA HAYE | 22 décembre 2000 | Gonzalez Ordonez, O |

CATEGORIE DES DOCUMENTS CITES

X : particulièrement pertinent à lui seul
Y : particulièrement pertinent en combinaison avec un
    autre document de la même catégorie
A : arriere-plan technologique
O : divulgation non-écrite
P : document intercalaire

T : theorie ou principe à la base de l'invention
E : document de brevet antérieur, mais publié à la
    date de dépôt ou après cette date
D : cité dans la demande
L : cité pour d'autres raisons

                                   
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 00 41 0114

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-2000

| Document brevet cité au rapport de recherche | | Date de publication | Membre(s) de la famille de brevet(s) | | Date de publication |
|---|---|---|---|---|---|
| EP 0853423 | A | 15-07-1998 | JP | 10200770 A | 31-07-1998 |
| | | | US | 5974173 A | 26-10-1999 |
| EP 0273398 | A | 06-07-1988 | JP | 63162248 A | 05-07-1988 |
| | | | JP | 63254863 A | 21-10-1988 |
| | | | JP | 63254887 A | 21-10-1988 |
| | | | JP | 2575134 B | 22-01-1997 |
| | | | JP | 63254888 A | 21-10-1988 |
| | | | JP | 7048869 B | 24-05-1995 |
| | | | JP | 63254889 A | 21-10-1988 |
| | | | JP | 2528463 B | 28-08-1996 |
| | | | JP | 63254864 A | 21-10-1988 |
| | | | JP | 63254865 A | 21-10-1988 |
| | | | JP | 1013890 A | 18-01-1989 |
| | | | JP | 7016257 B | 22-02-1995 |
| | | | US | 4959711 A | 25-09-1990 |
| | | | US | 5065234 A | 12-11-1991 |
| EP 0487304 | A | 27-05-1992 | JP | 4185075 A | 01-07-1992 |
| | | | DE | 69131119 D | 20-05-1999 |
| | | | DE | 69131119 T | 23-09-1999 |
| | | | US | 5315415 A | 24-05-1994 |

EPO FORM P0460

Pour tout renseignement concernant cette annexe : voir Journal Officiel de l'Office européen des brevets, No.12/82